# EUROPÄISCHE PATENTSCHRIFT

(11) **EP 1 923 301 B1**
(45) Veröffentlichungstag und Bekanntmachung des Hinweises auf die Patenterteilung: **13.04.2011**
(21) Anmeldenummer: 07021399.6
(22) Anmeldetag: 02.11.2007
(51) Int. Cl.: B62D 33/067, F16F 9/58, B60G 99/00

(54) **Schwingungsdämpfer mit Endanschlag**
Vibration damper with mechanical end stop
Amortisseur d'oscillations doté d'une butée

(30) Priorität: 14.11.2006 DE 102006053861
(43) Veröffentlichungstag der Anmeldung: 21.05.2008
(73) Patentinhaber: ZF Friedrichshafen AG, 88038 Friedrichshafen (DE)
(72) Erfinder: Holger, Gubitz, 97422 Schweinfurt (DE)

(56) Entgegenhaltungen:
- EP-A- 0 429 757
- EP-A- 1 609 632
- WO-A-92/19484
- WO-A-93/19973
- DE-A1- 3 402 070
- DE-A1- 4 121 206
- US-A- 4 747 587
- US-B1- 6 408 970

## Beschreibung

Die Erfindung betrifft einen Schwingungsdämpfer gemäß dem Oberbegriff von Patentanspruch 1.

Bei Nutzfahrzeugen werden im Rahmen der Federung der Fahrerhauskabine Schwingungsdämpfer eingesetzt, die den allgemein bekannten technischen Aufbau aufweisen. Es kann eine Drei- oder auch eine Vierpunktlagerung vorliegen, wobei das Fahrerhaus um eine Querachse im Bereich der Vorderfront kippbar gelagert ist, um Wartungsarbeiten durchführen zu können. Im gekippten Zustand des Fahrerhauses müssen die vorderen beiden Schwingungsdämpfer einen deutlich größeren Gewichtsanteil übernehmen als bei einer Normalposition. Dabei fährt die Kolbenstange über einen normalen Hubbereich hinaus in den Zylinder des Schwingungsdämpfers ein.

Die Endposition des Fahrerhauses wird vielfach von Endanschlägen bestimmt, die zwischen einem Fahrzeugrahmen und dem Fahrerhaus wirksam sind. Beispielhaft wird auf die DE 34 02 070 C2 verwiesen. In der DE 41 21 206 kommt ein Federblockzylinder zur Anwendung.

Aus der WO 9319973 ist ein Schwingungsdämpfer für ein kippbares Fahrerhaus mit einem Druckanschlagpuffer bekannt, der bei einer größeren Schwingbewegung bzw. Hubbewegung der Kolbenstange eine zusätzliche Stützkraft bewirkt.

Aufgabe der vorliegenden Erfindung ist es, eine platzsparende und trotzdem große Traglasten aufnehmende Lagerung für ein kippbares, federndgelagertes Fahrerhaus zu realisieren.

Erfindungsgemäß wird die Aufgabe durch die Merkmale des Patentanspruchs 1 gelöst.

Der Vorteil der Erfindung besteht darin, dass der Schwingungsdämpfer als ein das Fahrerhaus in der gekippten Position starr stützendes Halteelement verwendet werden kann, wobei der Anschlag keinen negativen Einfluss auf den Fahrkomfort ausübt, da der Anschlag im Normalhubbetrieb gar nicht in Funktion tritt.

Ein weiterer Vorteil ist darin zu sehen, dass mit der Montage des Schwingungsdämpfers auch ein Anschlag bzw. eine Kippbegrenzung vorliegt. Zusätzliche, bezogen auf den Schwingungsdämpfer, externe Bauteile sind nicht notwendig.

Die kolbenstangenseitige Anschlagkomponente wird von einer Scheibe gebildet, die problemlos sehr massiv ausgestaltet werden kann. Die Scheibe kann z. B. als Deckel Teil einer Luftfeder oder eines Federtellers für eine Schraubenfeder sein.

In weiterer vorteilhafter Ausgestaltung wird die zylinderseitige Anschlagkomponente von einem zylinderseitigen Anschlagring gebildet.

Eine besonders montagefreundliche Ausführung zeichnet sich dadurch aus, dass der Anschlagring von einer auf der kolbenstangenaustrittseitigen Stirnfläche des Zylinders angeordneten Endkappe gebildet wird. Bei der Montage wird die Endkappe einfach auf die Stirnfläche geklemmt.

Alternativ kann der Anschlagring auf einer äußeren Mantelfläche des Zylinders angeordnet sein. Diese Variante ist besonders dann interessant, wenn im Verhältnis zum Zylinderdurchmesser eine Kolbenstange mit einem großen Durchmesser verwendet werden soll.

Des Weiteren kann vorgesehen sein, dass der Anschlag eine geräuschisolierende Zwischenlage aufweist. Insbesondere bei metallischen Anschlagskomponenten ist diese Maßnahme sinnvoll.

Gemäß einem vorteilhaften Unteranspruch ist außerhalb des Zylinders eine die Kolbenstange teilweise einhüllende Druckanschlagfeder ausgeführt, die innerhalb des Normalhubbereichs wirksam ist. Bei der Druckanschlagfeder kann es sich um eine gewickelte Feder, aber auch um einen Elastomerkörper handeln.

Die Druckanschlagfeder wird von mindestens einer Anschlagkomponente radial geführt, so dass ein seitliches Auswandern und damit eine Beschädigung der Feder verhindert wird.

Man kann auch vorsehen, dass die kolbenstangenseitige Anschlagskomponente von einem die Kolbenstange abdeckende Schutzrohr gebildet wird. Eine derartige Ausführung ist besonders in Verbindung mit einem Tragring auf der äußeren Mantelfläche interessant.

Anhand der folgenden Figurenbeschreibung soll die Erfindung näher erläutert werden.

Es zeigen:
- Fig. 1 u. 2: Einbausituation des erfindungsgemäßen Schwingungsdämpfers
- Fig. 3 u. 4: Schwingungsdämpfer für eine Kombination mit einer Luftfeder
- Fig. 5 - 8: Schwingungsdämpfer für eine Schraubendruckfeder

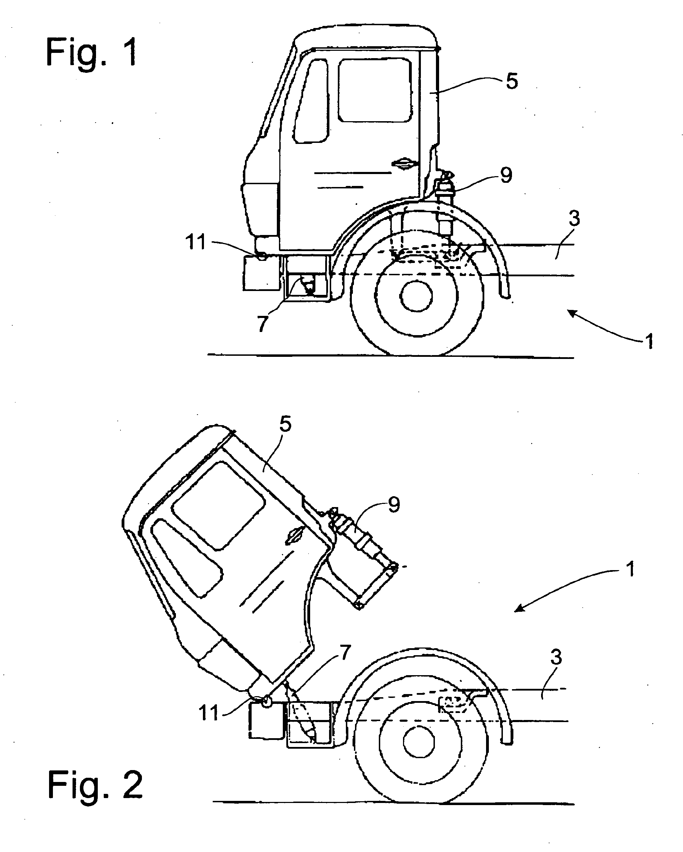

Die Figuren 1 und 2 zeigen beispielhaft einen Nkw 1 mit einem Rahmen 3 auf dem ein kippbares Fahrerhaus 5 gelagert ist. Das Fahrerhaus wird von Luftfedern oder Schraubenfedern in Kombination mit Schwingungsdämpfern 7; 9 schwingfähig getragen. Zur Wartung oder Reparatur kann das Fahrerhaus 5 um eine quer zur Längsachse des Fahrzeugs verlaufende Achse 11 gekippt werden, wodurch die Traglast der vorderen Schwingungsdämpfer 7 deutlich ansteigt.

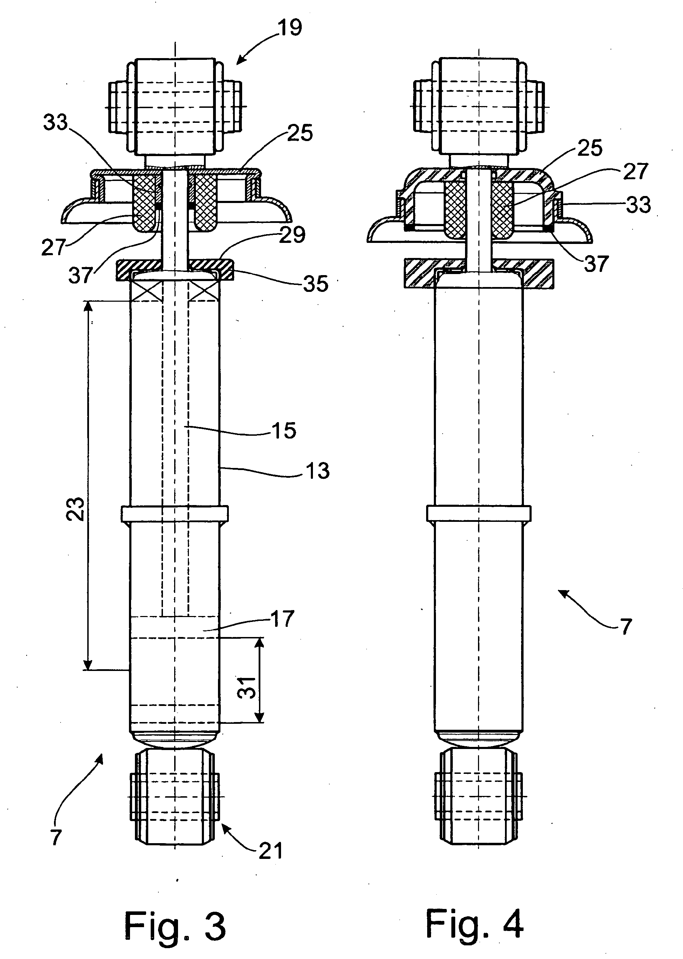

In der Fig. 3 ist ein erstes Ausführungsbeispiel eines Schwingungsdämpfers 7 dargestellt, der einen Zylinder 13 aufweist, in dem eine Kolbenstange 15 mit einem Kolben 17 eine axiale Hubbewegung ausführen kann. Am außenliegenden Ende der Kolbenstange 15 ist ein Anschlussorgan 19 zum Fahrerhaus und am Zylinder ein Anschlussorgan 21 zum Fahrzeugrahmen befestigt. Wenn sich das Fahrerhaus in der in Fig. 1 gezeigten Position befindet, dann sorgen die tragenden Federn dafür, dass die Kolbenstange nur eine Hubbewegung im Normalhubbereich 23 ausführen kann.

Zur Kolbenstange 15 ist axial fest eine Scheibe in der Bauform eines Deckels 25 angeordnet, der in diesem Ausführungsbeispiel einen Teil einer Luftfeder darstellt. An der Innenseite des Deckels ist eine Druckanschlagfeder 27 angeordnet, die ab einer definierten Einfahrposition im Normalhubbereich der Kolbenstange 15 auf einer zylinderseitigen Stirnfläche 29 zur Anlage kommt und eine progressive Federkraftkennlinie erzeugt.

Wenn das Fahrerhaus gekippt ist, durchfährt der Kolben einen zusätzlichen Hubbereich 31, der von einem Anschlag begrenzt wird, der einerseits mit der Kolbenstange und andererseits mit dem Zylinder in Wirkverbindung steht. Die kolbenstangenseitige Komponente wird von einer Hülse 33 als Teil des Deckels 25 und die zylinderseitige Komponente von einer auf der Stirnfläche des Zylinders angeordneten Endkappe 35 gebildet. Die Hülse 33 besteht aus einem zumindest im Vergleich zur Druckanschlagfeder 27 deutlich steiferen Material und kann zur Geräuschisolierung beim Auftreffen auf die Endkappe über eine geräuschisolierende Zwischenlage 37 verfügen.

Der Aufbau des Schwingungsdämpfers nach Fig. 4 entspricht weitgehend dem zur Fig. 3 Beschriebenen. Abweichend ist die Hülse 33 einteilig mit dem Deckel 25 ausgeführt und umschließt die Druckanschlagfeder 27 radial außen.

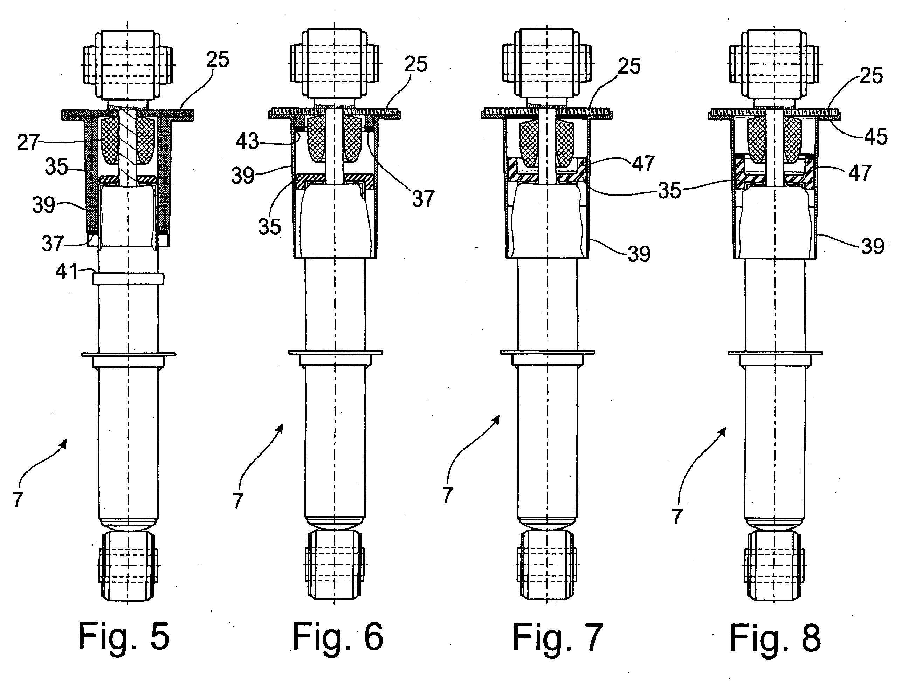

Mit den Fig. 5 bis 8 soll gezeigt werden, dass sich die Erfindung nicht auf die Kombination mit einer Luftfeder beschränkt, sondern auch bei Schwingungsdämpfern in Verbindung mit Schraubenfedern anwendbar ist.

In der Fig. 5 wird die kolbenstangenseitige Anschlagskomponente von einem Schutzrohr 39 an der Scheibe 25 gebildet, die auf einer zylinderseitigen Anschlagskomponente in der Bauform eines Anschlagrings 41 auf einer äußeren Mantelfläche zur Anlage kommen kann. Auch bei dieser Variante kann an beliebiger Stelle zwischen den beiden Anschlagskomponenten 39; 41 eine geräuschisolierende Zwischenlage 37 angeordnet sein. Das Schutzrohr 39 begrenzt die radiale Ausdehnung der Druckanschlagfeder 27 und schützt diese vor Beschädigungen.

Die Variante nach Fig. 6 basiert auf der Fig. 5, verfügt jedoch über einen Absatz 43, dessen in Richtung der Endkappe weisende Fläche die Anschlagfunktion übernimmt. Dadurch kann der axial hochbelastete Anteil des Schutzrohres 39 auf eine sehr kleine Baulänge begrenzt werden.

Mit den Lösungen nach den Fig. 7 und 8 soll verdeutlicht werden, dass auch mit einem sehr einfachen Deckeldesign eine Anschlagfunktion möglich ist. Die Scheibe 25 wird von einer einfachen ringförmigen Platte gebildet, die sich radial über das Schutzrohr 39 erstreckt, so dass eine Federanlagefläche 45 für eine nicht dargestellte Schraubenfeder zur Verfügung steht. Die Endkappe weist in beiden Figuren 7 und 8 mindestens einen stegartigen Anschlag 47 auf, der in der Endposition an der Innenseite der Scheibe 25 zur Anlage kommt. Wahlweise kann die geräuschisolierende Zwischenlage 37 an der Scheibeninnenseite oder dem stegartigen Anschlag 47 zur Anwendung kommen.

## Patentansprüche

1. Schwingungsdämpfer (7; 9) für ein kippbar gelagertes Fahrerhaus (5), umfassend eine Kolbenstange (15), die in einem Zylinder (13) eine axiale Hubbewegung ausführt, wobei sich eine Schwingbewegung des Fahrerhauses (5) auf einen Normalhubbereich (23) beschränkt und bei einer Kippbewegung eine zusätzliche Hubbewegung der Kolbenstange (15) zum Zylinder (13) ausgeführt wird,
**dadurch gekennzeichnet,**
**dass** eine Druckanschlagfeder (27) mit einer progressiven Federkraftkennlinie ab einer definierten Einfahrposition im Normalhubbereich (23) der Kolbenstange (15) einsetzt und die zusätzliche Hubbewegung von einem Anschlag (33; 35; 39; 41) begrenzt wird, der einerseits mit der Kolbenstange (15) und andererseits mit dem Zylinder (13) in Wirkverbindung steht, wobei der Anschlag (33; 35; 39; 41) im Vergleich zur Druckanschlagfeder (27) aus einem deutlich steiferen Material besteht.

2. Schwingungsdämpfer nach Anspruch 1,
**dadurch gekennzeichnet,**
**dass** die kolbenstangenseitige Anschlagkomponente von einer Scheibe (25) gebildet wird.

3. Schwingungsdämpfer nach Anspruch 1,
**dadurch gekennzeichnet,**
**dass** die zylinderseitige Anschlagkomponente von einem zylinderseitigen Anschlagring (35; 41) gebildet wird.

4. Schwingungsdämpfer nach Anspruch 1,
**dadurch gekennzeichnet,**
**dass** der Anschlagring von einer auf der kolbenstangenaustrittseitigen Stirnfläche des Zylinders (13) angeordneten Endkappe (35) gebildet wird.

5. Schwingungsdämpfer nach Anspruch 1,
**dadurch gekennzeichnet,**
**dass** der Anschlagring (41) auf einer äußeren Mantelfläche des Zylinders (13) angeordnet ist.

6. Schwingungsdämpfer nach Anspruch 1,
**dadurch gekennzeichnet,**
**dass** der Anschlag eine geräuschisolierende Zwischenlage (37) aufweist.

7. Schwingungsdämpfer nach Anspruch 1,
**dadurch gekennzeichnet,**
**dass** außerhalb des Zylinders (13) die die Kolbenstange (15) teilweise einhüllende Druckanschlagfeder (27) ausgeführt ist, die innerhalb des Normalhubbereichs (23) wirksam ist.

8. Schwingungsdämpfer nach Anspruch 7,
**dadurch gekennzeichnet,**
**dass** die Druckanschlagfeder (27) von mindestens einer Anschlagkomponente (33; 39; 47) radial geführt wird.

9. Schwingungsdämpfer nach Anspruch 1,
**dadurch gekennzeichnet,**
**dass** die kolbenstangenseitige Anschlagskomponente von einem die Kolbenstange (15) abdeckende Schutzrohr (39) gebildet wird.

## Claims

1. Vibration damper (7; 9) for a tiltably mounted driver's cab (5), comprising a piston rod (15) which executes an axial lifting movement in a cylinder (13), a vibratory movement of the driver's cab (5) being restricted to a normal lift range (23), and an additional lifting movement of the piston rod (15) with respect to the cylinder (13) being executed during a tilting movement, **characterized in that** a pressure impact spring (27) having a progressive spring-force characteristic curve comes into effect from a defined run-in position in the normal lift range (23) of the piston rod (15), and the additional lifting movement is limited by a stop (33; 35; 39; 41) which is operatively connected, on the one hand, to the piston rod (15) and, on the other hand, to the cylinder (13), the stop (33; 35; 39; 41) consisting of a markedly more rigid material, as compared with the pressure impact spring (27).

2. Vibration damper according to Claim 1, **characterized in that** the piston rod-side stop component is formed by a washer (25).

3. Vibration damper according to Claim 1, **characterized in that** the cylinder-side stop component is formed by a cylinder-side stop ring (35; 41).

4. Vibration damper according to Claim 1, **characterized in that** the stop ring is formed by an end cap (35) arranged on the piston rod exit-side end face of the cylinder (13).

5. Vibration damper according to Claim 1, **characterized in that** the stop ring (41) is arranged on an outer surface area of the cylinder (13).

6. Vibration damper according to Claim 1, **characterized in that** the stop has a noise-insulating intermediate layer (37).

7. Vibration damper according to Claim 1, **characterized in that** the pressure impact spring (27) partially enveloping the piston rod (15) is formed outside the cylinder (13) and is effective within the normal lift range (23).

8. Vibration damper according to Claim 7, **characterized in that** the pressure impact spring (27) is guided radially by at least one stop component (33; 39; 47).

9. Vibration damper according to Claim 1, **characterized in that** the piston rod-side stop component is formed by a protective tube (39) covering the piston rod (15).

## Revendications

1. Amortisseur d'oscillations (7 ; 9) pour une cabine de conducteur (5) montée de manière à pouvoir basculer, comprenant une tige de piston (15) qui effectue, dans un cylindre (13), un mouvement de levage axial, un mouvement d'oscillation de la cabine de conducteur (5) étant limité à une région de levage normale (23), et dans le cas d'un mouvement de basculement, un mouvement de levage supplémentaire de la tige de piston (15) par rapport au cylindre (13) étant effectué, **caractérisé en ce**
**qu'**un ressort de butée de pression (27) avec une caractéristique de force de ressort progressive est ajusté à partir d'une position d'entrée définie dans la région de levage normale (23) de la tige de piston (15) et le mouvement de levage supplémentaire est limité par une butée (33 ; 35 ; 39 ; 41), qui est en liaison fonctionnelle d'une part avec la tige de piston (15) et d'autre part avec le cylindre (13), la butée (33 ; 35 ; 39 ; 41) se composant d'un matériau nettement plus rigide que celui du ressort de butée de pression (27).

2. Amortisseur d'oscillations selon la revendication 1,
**caractérisé en ce que**
le composant de butée du côté de la tige de piston est formé par un disque (25).

3. Amortisseur d'oscillations selon la revendication 1,
**caractérisé en ce que**
le composant de butée du côté du cylindre est formé par une bague de butée (35 ; 41) du côté du cylindre.

4. Amortisseur d'oscillations selon la revendication 1,
**caractérisé en ce que**
la bague de butée est formée par un capuchon d'extrémité (35) disposé sur la face frontale du cylindre (13) du côté de la sortie de la tige de piston.

5. Amortisseur d'oscillations selon la revendication 1,
**caractérisé en ce que**
la bague de butée (41) est disposée sur une surface d'enveloppe extérieure du cylindre (13).

6. Amortisseur d'oscillations selon la revendication 1,
**caractérisé en ce que**
la butée présente une couche intermédiaire (37) amortissant les sons.

7. Amortisseur d'oscillations selon la revendication 1,
**caractérisé en ce que**
le ressort de butée de pression (27) enveloppant partiellement la tige de piston (15) est réalisé en dehors du cylindre (13) et agit à l'intérieur de la région de levage normale (23).

8. Amortisseur d'oscillations selon la revendication 7,
**caractérisé en ce que**
le ressort de butée de pression (27) est guidé radialement par au moins un composant de butée (33 ; 39 ; 47).

9. Amortisseur d'oscillations selon la revendication 1,
**caractérisé en ce que**
le composant de butée du côté de la tige de piston est formé par un tube de protection (39) recouvrant la tige de piston (15).
